# EUROPEAN PATENT APPLICATION

(11) **EP 4 748 645 A1**
(43) Date of publication of application: **27.05.2026**
(21) Application number: 23945686.6
(22) Date of filing: 30.11.2023
(51) Int. Cl.: B60N 3/10

(54) **CUP HOLDER APPARATUS AND AUTOMOBILE**

(30) Priority: 19.07.2023 CN 202310888772
(71) Applicant: Zhejiang Geely Holding Group Co., Ltd, Hangzhou, Zhejiang 310051 (CN); Geely Automobile Research Institute (Ning Bo) Co., Ltd., Ningbo, Zhejiang 315336 (CN)
(72) Inventor: LI, Jangwook, Hangzhou, Zhejiang 310051 (CN); CAO, Zheng, Hangzhou, Zhejiang 310051 (CN); LIU, Fuhai, Hangzhou, Zhejiang 310051 (CN); DAN, Tengfei, Hangzhou, Zhejiang 310051 (CN); ZHANG, Shuaixing, Hangzhou, Zhejiang 310051 (CN)
(74) Representative: Murgitroyd & Company
(86) International application number: PCT/CN2023/135324
(87) International publication number: WO 2025/015807

(57) **Abstract**

The present invention relates to the technical field of automobile parts, and provided thereby are a cup holder apparatus and an automobile. The cup holder apparatus comprises a box body, a first rotation mechanism, and a partition plate structure. An opening is provided in a top portion of the box body. A storage cavity structure is formed in the interior of the box body. The partition plate structure is arranged in the storage cavity structure, and one end of the partition plate structure is rotatably mounted at a bottom portion of the box body by means of the first rotation mechanism, so that the partition plate structure rotates relative to the box body. When the partition plate structure rotates to a calibrated position, the partition plate structure separates out, from the storage cavity structure, a cavity structure for placing cups.

## Description

### Technical Field

The present invention relates to the technical field of automobile parts, and more particularly relates to a cup holder apparatus and an automobile.

### Background Art

During a traveling process of an automobile, both a driver and passengers may feel thirsty. In order to replenish water in time, it is common to bring cups into the automobile. At present, many automobiles are provided with apparatuses for holding cups at auxiliary dashboards or other positions, and these apparatuses are also known as cup holders, which are generally cylindrical structures made according to sizes of the cups, so as to better fix and place the cups.

However, the existing cup holders can be usually only used for placing the cups or items smaller than the cups in size. When no cup is brought into the automobile, the cup holder occupies the space of the instrument panel, and the cup holder cannot be used for storing items larger than the cups in size, so that a storage box needs to be separately provided, and the cup holder is arranged separately from the storage box, which is disadvantageous for saving the space of the auxiliary dashboard.

### Summary of the Invention

The problem to be solved by the present invention is how to achieve the integration of a cup holder and a storage function.

In order to solve the above problem, the present invention provides a cup holder apparatus, including a box body, a first rotation mechanism, and a partition plate structure, wherein an opening is provided in a top portion of the box body, a storage cavity structure is formed in the interior of the box body, the partition plate structure is arranged in the storage cavity structure, and one end of the partition plate structure is rotatably mounted at a bottom portion of the box body by means of the first rotation mechanism, so that the partition plate structure rotates relative to the box body. When the partition plate structure rotates to a calibrated position, the partition plate structure separates out, from the storage cavity structure, a cavity structure for placing cups.

The technical effects of the present invention are as follows: the opening is provided in the top portion of the box body, the storage cavity structure is formed in the interior of the box body, and one end of the partition plate structure is rotatably mounted at the bottom portion of the box body by means of the first rotation mechanism, so that the partition plate structure may rotate relative to the box body; when a passenger needs to store an item, the partition plate structure may be rotated towards a direction away from the opening, and the partition plate structure is attached to a bottom wall of the box body, so that the passenger may place an item larger than the cup in size in the storage cavity structure; and when the passenger needs to place a cup, the partition plate structure may be rotated towards a direction close to the opening, so that the partition plate structure is positioned at, for example, a vertical position, a cavity structure smaller in size is separated out from the storage cavity stricture, for example, a cavity structure adapted to the size of the cup is separated out from the storage cavity stricture, and the passenger may place the cup in the cavity structure to prevent the cup from shaking. Therefore, the above cup holder apparatus may be used for both storing items larger than cups in size and placing cups, and the integration of the cup holder and the storage function may be achieved.

Preferably, the first rotation mechanism includes a rotation shaft and a bearing member, the rotation shaft is mounted to the storage cavity structure, the bearing memberis sleeved on the rotation shaft, and the partition plate structure is connected to the bearing member.

Preferably, a limiting port is provided in the bottom portion of the box body, the bearing member is positioned at an edge of the limiting port, a circumferential side wall of the bearing member is provided with a planar structure, the planar structure is arranged towards the limiting port, and the bearing member is used for being rotated into the limiting port, so that the planar structure abuts against a side wall of the box body enclosing the limiting port.

Preferably, a shielding plate is mounted at the bottom portion of the box body and covers the limiting port, and the shielding plate is recessed towards a direction away from the bearing member and used for accommodating a part of the bearing member.

Preferably, the partition plate structure includes a first partition plate and a second partition plate, one end of the first partition plate is connected to the first rotation mechanism, one end of the second partition plate is connected to the other end of the first partition plate, and the other end of the second partition plate bends and extends towards a direction close to the first rotation mechanism, so that the second partition plate is used for shielding the first rotation mechanism.

Preferably, the cup holder apparatus further includes a chuck, wherein the chuck is mounted to the first partition plate and arranged at an included angle with the first partition plate, and the chuck is used for clamping the cups with the side wall of the box body.

Preferably, the cup holder apparatus further includes a second rotation mechanism, wherein the chuck is rotatably mounted to the first partition plate by means of the second rotation mechanism, and the chuck is used for being rotated to be attached to the first partition plate or at a preset angle with the first partition plate.

Preferably, the second rotation mechanism includes a first gear portion and a second gear portion, the first gear portion is connected to the first rotation mechanism by means of a linkage mechanism, the first gear portion is meshed with the second gear portion, and the second gear portion is connected to the chuck.

Preferably, the linking mechanism includes a first connecting rod and a second connecting rod, one end of the first connecting rod is connected to the first gear portion, the other end of the first connecting rod is hinged to one end of the second connecting rod, and the other end of the second connecting rod is hinged to the first rotation mechanism.

The present invention further provides an automobile, including the cup holder apparatus as described above.

The beneficial effects of the automobile according to the present invention are the same as those of the cup holder apparatus, which will not be described in detail herein.

### Brief Description of the Drawings

FIG. 1 is a schematic structural diagram of a cup holder apparatus in a state for storing an item according to an example of the present invention;
FIG. 2 is a schematic structural diagram of the cup holder apparatus in a state for placing a cup according to an example of the present invention;
FIG. 3 is a schematic cross-sectional sketch of the cup holder apparatus according to an example of the present invention;
FIG. 4 is a schematic diagram of a bottom structure of the cup holder apparatus according to an example of the present invention; and
FIG. 5 is a schematic structural diagram of a partition plate structure according to an example of the present invention.

### Description of reference numerals:

1. box body; 2. first rotation mechanism; 21. rotation shaft; 22. bearing member; 221. planar structure; 3. partition plate structure; 31. first partition plate; 32. second partition plate; 4. opening; 5. storage cavity structure; 6. cavity structure; 7. limiting port; 8. shielding plate; 9. chuck; 10. second rotation mechanism; 101. first gear portion; 102. second gear portion; 11. protruding portion; 12. linkage mechanism; 121. first connecting rod; and 122. second connecting rod.

### Detailed Description of the Invention

In order to make the above objects, features and advantages of the present invention more apparent and understandable, the specific examples of the present invention will be described in detail with reference to the accompanying drawings below.

It should be noted that the terms "first", "second", and the like in the description and claims of the present invention and the above drawings are used for distinguishing between similar items and not necessarily for describing a particular sequence or chronological order. It should be understood that the data so used is interchangeable under appropriate circumstances, so that the examples of the present invention described herein can be implemented in other sequences than illustrated or described herein.

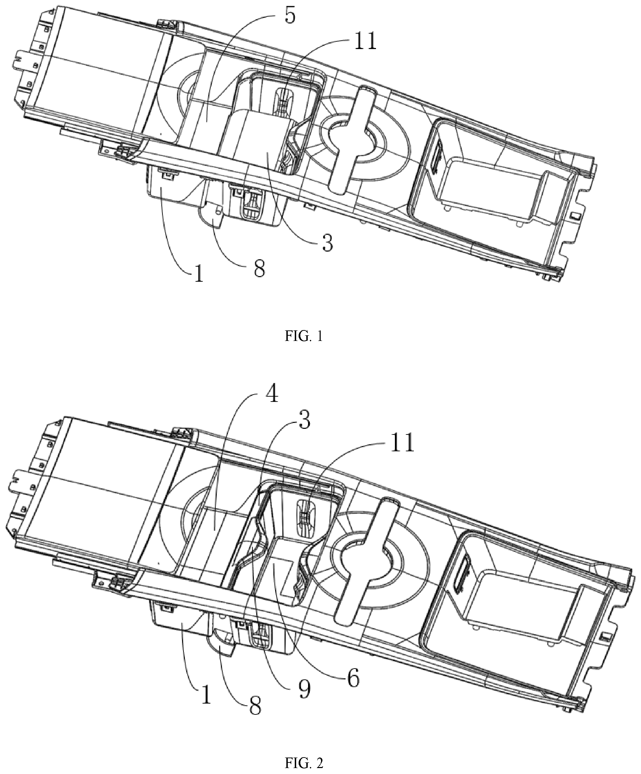

Referring to FIG. 1 to FIG. 4, a cup holder apparatus provided in an example of the present invention includes a box body 1, a first rotation mechanism 2, and a partition plate structure 3, wherein an opening 4 is provided in a top portion of the box body 1, a storage cavity structure 5 is formed in the interior of the box body 1, the partition plate structure 3 is arranged in the storage cavity structure 5, and one end of the partition plate structure 3 is rotatably mounted at a bottom portion of the box body 1 by means of the first rotation mechanism 2, so that the partition plate structure 3 rotates relative to the box body 1; when the partition plate structure 3 rotates to a calibrated position, the partition plate structure 3 separates out, from the storage cavity structure 5, a cavity structure 6 for placing cups.

Specifically, the cup holder apparatus may include the box body 1, the first rotation mechanism 2, and the partition plate structure 3, in this example, the box body 1 may be arranged on an auxiliary dashboard of an automobile in an embedded manner, and in other examples, the box body 1 may be arranged at other positions in the automobile. The opening 4 may be provided in the top portion of the box body 1, the storage cavity structure 5 may be formed in the interior of the box body 1, and the size of the storage cavity structure 5 is larger than the size of the cup, so that the storage cavity structure 5 may be used for placing items larger than the cup in size. In this example, the size of the cup may refer to the size of a common beverage container such as a beverage bottle and a large cup for milky tea with a specification of 500 ml, and in other examples, the size of the cup may also refer to the size of a vacuum cup with other specifications.

The partition plate structure 3 may be arranged in the storage cavity structure 5. In this example, the width of the partition plate structure 3 may match the width of the storage cavity structure 5, and one end of the partition plate structure 3 may be rotatably mounted at the bottom portion of the box body 1 by means of the first rotation mechanism 2, so that the partition plate structure 3 may rotate relative to the box body 1, and the other end of the partition plate structure 3 may rotate towards a direction close to or away from the opening 4.

More clearly, the partition plate structure 3 may be rotated to a first position and a second position. When the partition plate structure 3 is rotated towards the direction close to the opening 4 to be vertically arranged, that is, when the partition plate structure 3 is perpendicular to a bottom wall of the box body 1, at this moment, the position of the partition plate structure 3 is the first position, the first position refers to the calibrated position, and the partition plate structure 3 at the first position may separate out, from the storage cavity structure 5, a cavity structure 6 with a smaller size, for example, separate out, from the storage cavity structure 5, a cavity structure 6 adapted to the size of the cup, so that a passenger may place the cup in the cavity structure 6 to prevent the cup from shaking.

When the partition plate structure 3 is rotated towards the direction away from the opening 4 to be horizontally arranged, at this moment, the position of the partition plate structure 3 is the second position, and the partition plate structure 3 at the second position may be attached to the bottom wall of the box body 1, so that the passenger may place an item larger than the cup in size in the storage cavity structure 5. Therefore, the above cup holder apparatus may be used for both storing items larger than cups in size and placing cups, and the integration of the cup holder and the storage function may be achieved.

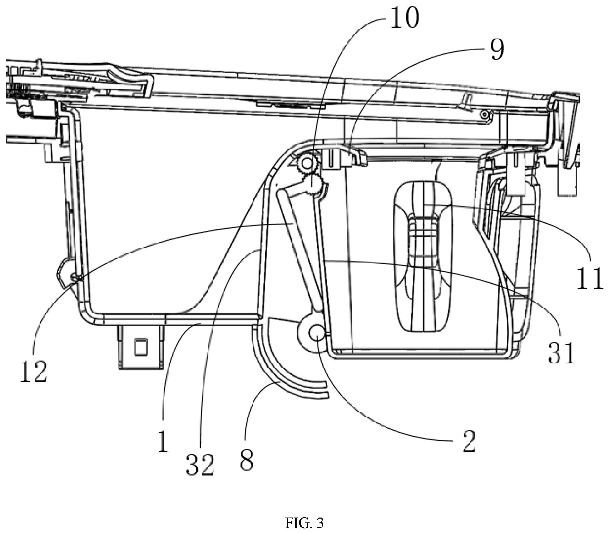

Referring to FIG. 3 to FIG. 5, in some examples, the first rotation mechanism 2 includes a rotation shaft 21 and a bearing member 22, wherein the rotation shaft 21 is mounted to the storage cavity structure 5, the bearing member 22 is sleeved on the rotation shaft 21, and the partition plate structure 3 is connected to the bearing member 22.

Specifically, the first rotation mechanism 2 may include the rotation shaft 21 and the bearing member 22, wherein the rotation shaft 21 may be arranged in the storage cavity structure 5, the rotation shaft 21 is positioned at the bottom portion of the box body 1, the rotation shaft 21 is positioned in a middle area of the box body 1, two opposite ends of the rotation shaft 21 may be respectively mounted on two opposite side walls of the box body 1, and the bearing member 22 may be sleeved on the rotation shaft 21, so that the bearing member 22 may rotate around an axis of the rotation shaft 21, and one end of the partition plate structure 3 may be connected to the bearing member 22, so that the partition plate structure 3 may rotate relative to the box body 1, and may rotate more smoothly.

Referring to FIG. 3 to FIG. 5, in some examples, a limiting port 7 is provided in the bottom portion of the box body 1, the bearing member 22 is positioned at an edge of the limiting port 7, a circumferential side wall of the bearing member 22 is provided with a planar structure 221, the planar structure 221 is arranged towards the limiting port 7, and the bearing member 22 is used for being rotated into the limiting port 7, so that the planar structure 221 abuts against a side wall of the box body 1 enclosing the limiting port 7.

Specifically, the limiting port 7 may be provided in the bottom portion of the box body 1, the limiting port 7 may be provided opposite to the opening 4 of the box body 1, the rotation shaft 21 may be transversely arranged directly above the limiting port 7, the bearing member 22 may be sleeved on the rotation shaft 21, the bearing member 22 is positioned at the edge of the limiting port 7, the circumferential side wall of the bearing member 22 may be provided with the planar structure 221, and the planar structure 221 may be arranged towards the limiting port 7.

When the partition plate structure 3 rotates towards the position close to the opening 4 of the box body 1, the partition plate structure 3 may drive the bearing member 22 to rotate, in a rotation process, a part of the bearing member 22 extends into the limiting port 7, and as the partition plate structure 3 rotates, the planar structure 221 on the bearing member 22 may abut against the side wall enclosing the limiting port 7, so as to play a role of limiting the bearing member 22 to continue to rotate. Moreover, at this moment, the partition plate structure 3 is at the first position, namely, the partition plate structure 3 is vertically arranged, so that the partition plate structure 3 may separate out, from the storage cavity structure 5, the cavity structure 6 for placing cups.

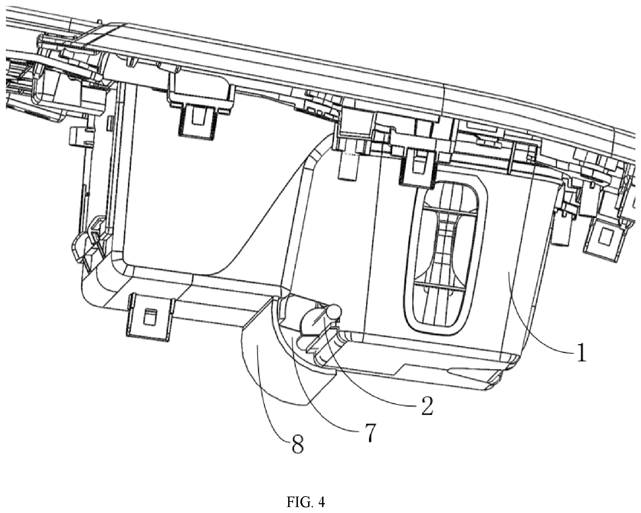

Referring to FIG. 3 and FIG. 4, in some examples, the cup holder apparatus further includes a shielding plate 8, wherein the shielding plate 8 is mounted at the bottom portion of the box body 1 and covers the limiting port 7, and the shielding plate 8 is recessed towards a direction away from the bearing member 22 and used for accommodating a part of the bearing member 22.

Specifically, the cup holder apparatus may further include the shielding plate 8, wherein the shielding plate 8 may be positioned outside the storage cavity structure 5, and the shielding plate 8 may be mounted at the bottom portion of the box body 1 and also covers the limiting port 7, so that the shielding plate 8 may shield the limiting port 7, and the shielding plate 8 may be recessed towards the direction away from the bearing member 22 to form an accommodating cavity. When the partition plate structure 3 rotates towards the position close to the opening 4 of the box body 1, the accommodating cavity is used for accommodating a part of the bearing member 22, so as to prevent the bearing member 22 from interfering with other parts and avoid the bearing member 22 being blocked by components other than the side wall enclosing the limiting port 7 in the rotation process.

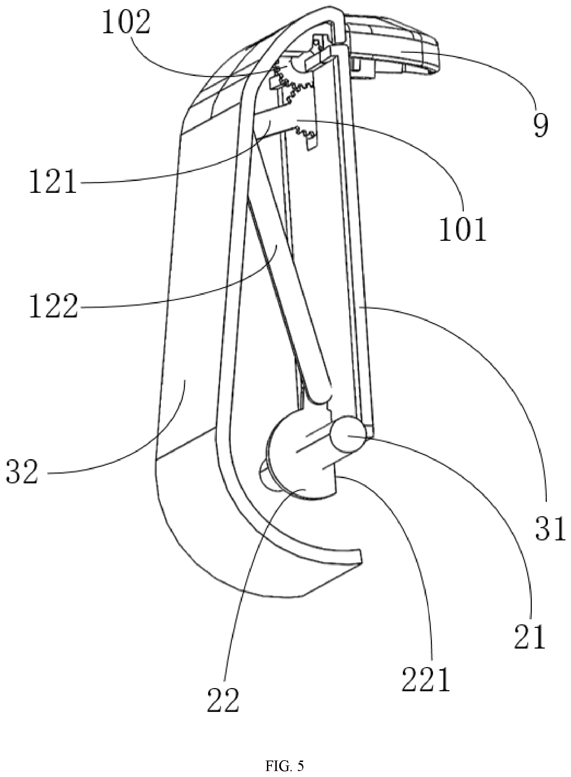

Referring to FIG. 3 and FIG. 5, in some examples, the partition plate structure 3 includes a first partition plate 31 and a second partition plate 32, wherein one end of the first partition plate 31 is connected to the first rotation mechanism 2, one end of the second partition plate 32 is connected to the other end of the first partition plate 31, and the other end of the second partition plate 32 bends and extends towards a direction close to the first rotation mechanism 2, so that the second partition plate 32 is used for shielding the first rotation mechanism 2.

Specifically, the partition plate structure 3 may include the first partition plate 31 and the second partition plate 32, wherein the first partition plate 31 and the second partition plate 32 are both of square plate-shaped structures, one end of the first partition plate 31 may be connected to the first rotation mechanism 2, that is, one end of the first partition plate 31 is connected to the bearing member 22, the first partition plate 31 may be rotatably connected to the rotation shaft 21 by means of the bearing member 22, one end of the second partition plate 32 may be connected to the other end of the first partition plate 31, the first partition plate 31 may be arranged at an included angle with the second partition plate 32, and the other end of the second partition plate 32 may bend and extend towards the direction close to the first rotation mechanism 2, so that the second partition plate 32 may be used for shielding the first rotation mechanism 2, the first rotation mechanism 2 may be prevented from being exposed in the box body 1, and the items placed in the storage cavity structure 5 may also be prevented from interfering with the first rotation mechanism 2.

When the partition plate structure 3 rotates to the first position, namely, when the partition plate structure 3 is rotated to be vertically arranged, the first partition plate 31 may enclose the cavity structure 6 for placing cups with the side wall of the box body 1. When the partition plate structure 3 rotates to the second position, namely, when the partition plate structure 3 is rotated to be horizontally arranged, the first partition plate 31 may be attached to the bottom wall of the box body 1, and the second partition plate 32 serves as the bottom wall of the box body 1 and supports the item when the item is placed in the storage cavity structure 5.

Referring to FIG. 2, in some examples, the cup holder apparatus further includes a chuck 9, wherein the chuck 9 is mounted to the first partition plate 31 and arranged at an included angle with the first partition plate 31, and the chuck 9 is used for clamping the cups with the side wall of the box body 1.

Specifically, the cup holder apparatus may further include the chuck 9, wherein the chuck 9 may be mounted on the first partition plate 31 and may be arranged at an included angle with the first partition plate 31. In this example, the chuck 9 may be positioned at one end of the first partition plate 31 away from the bearing member 22. When the partition plate structure 3 rotates to the first position, the first partition plate 31 may enclose the cavity structure 6 with the side wall of the box body 1, and the chuck 9 may segment the cavity structure 6 into two smaller spaces; and when the cup is placed in the space, the chuck 9 may clamp the cup with the side wall of the box body 1, thereby preventing the cup from shaking and enabling the cavity structure 6 to place more cups.

Referring to FIG. 3 and FIG. 5, in some examples, the cup holder apparatus further includes a second rotation mechanism 10, wherein the chuck 9 is rotatably mounted to the first partition plate 31 by means of the second rotation mechanism 10, and the chuck 9 is used for being rotated to be attached to the first partition plate 31 or at a preset angle with the first partition plate 31.

Specifically, the cup holder apparatus may further include the second rotation mechanism 10, wherein the chuck 9 may be rotatably mounted on the first partition plate 31 by means of the second rotation mechanism 10. In this example, the first partition plate 31 is arranged at an included angle with the second partition plate 32, the second rotation mechanism 10 may be arranged in a space enclosed by the first partition plate 31 and the second partition plate 32, the first partition plate 31 may be provided with an accommodating port, and the second rotation mechanism 10 may extend into the accommodating port to be connected to the chuck 9, so that the chuck 9 may be rotatably connected on the first partition plate 31, and thus the chuck 9 may rotate relative to the first partition plate 31.

When the partition plate structure 3 rotates towards a direction close to the opening 4 to the first position, the chuck 9 may be rotated towards a direction away from the first partition plate 31, so that the chuck 9 is arranged at a preset angle with the first partition plate 31. Preferably, the chuck 9 is perpendicular to the first partition plate 31, at this moment, the chuck 9 may divide the cavity structure 6 into two smaller spaces, and the chuck 9 may clamp the cup in the space with the side wall of the box body 1, so that the cup is placed more firmly.

When the partition plate structure 3 rotates towards a direction away from the opening 4 to the second position, the chuck 9 may be rotated towards a direction close to the first partition plate 31, so that the chuck 9 is attached to the first partition plate 31, that is, when the partition plate structure 3 rotates to the horizontal position, the chuck 9 may be rotated to the horizontal position by means of the second rotation mechanism 10 and folded together with the first partition plate 31, thereby avoiding tilting of the partition plate structure 3 caused by the chuck 9 perpendicularly abutting against the bottom portion of the box body 1, then conveniently containing the partition plate structure 3 in the bottom portion of the box body 1, and conveniently placing the items on the partition plate structure 3.

Referring to FIG. 3 and FIG. 5, in some examples, the second rotation mechanism 10 includes a first gear portion 101 and a second gear portion 102, wherein the first gear portion 101 is connected to the first rotation mechanism 2 by means of a linkage mechanism 12, the first gear portion 101 is meshed with the second gear portion 102, and the second gear portion 102 is connected to the chuck 9.

Specifically, the second rotation mechanism 10 may include the first gear portion 101 and the second gear portion 102, wherein both the first gear portion 101 and the second gear portion 102 may be arranged in the space enclosed by the first partition plate 31 and the second partition plate 32, the first gear portion 101 is meshed with the second gear portion 102, and the first gear portion 101 may be connected to the first rotation mechanism 2 by means of the linkage mechanism 12. More clearly, the first gear portion 101 is connected to the bearing member 22 by means of a connector, so that when the bearing member 22 rotates, the bearing member 22 may drive the first gear portion 101 to move together, the second gear portion 102 may be connected to the chuck 9, the chuck 9 may be manually toggled to enable the chuck 9 to rotate relative to the first partition plate 31, and the first gear portion 101 is meshed with the second gear portion 102, so that the chuck 9 may be rotated more smoothly.

Referring to FIG. 5, in some examples, the linkage mechanism 12 includes a first connecting rod 121 and a second connecting rod 122, wherein one end of the first connecting rod 121 is connected to the first gear portion 101, the other end of the first connecting rod 121 is hinged to one end of the second connecting rod 122, and the other end of the second connecting rod 122 is hinged to the first rotation mechanism 2.

Specifically, the linkage mechanism 12 includes the first connecting rod 121 and the second connecting rod 122, wherein one end of the first connecting rod 121 may be connected to the first gear portion 101, in this example, the first connecting rod 121 and the first gear portion 101 are made by integral molding, the other end of the first connecting rod 121 may be hinged to one end of the second connecting rod 122, the other end of the second connecting rod 122 may be hinged to the first rotation mechanism 2, namely, the other end of the second connecting rod 122 is hinged to the bearing member 22, and the first connecting rod 121 and the second connecting rod 122 may be connected to the bearing member 22 and the first gear portion 101, so that the first gear portion 101 may move synchronously with the bearing member 22, and the first connecting rod 121 and the second connecting rod 122 may also play a role of supporting the first gear portion 101.

Referring to FIG. 1 and FIG. 2, in some examples, a protruding portion 11 is arranged on the side wall for enclosing the cavity structure 6 with the partition plate structure 3, and the protruding portion 11 is used for abutting against the cup.

Specifically, when the partition plate structure 3 rotates to the first position, the partition plate structure 3 may enclose the cavity structure 6 with a part of an inner side wall of the box body 1, the part of the inner side wall on the box body 1 may be provided with the protruding portion 11, and when the cup is placed in the cavity structure 6, the protruding portion 11 may abut against the cup, so that the cup may be placed more stably, and the cup may be further prevented from shaking.

Another example of the present invention further provides an automobile, including the cup holder apparatus as described above.

Similarly, the automobile in this example has the same or similar examples and beneficial effects as those of the above cup holder apparatus based on the same inventive concept, which will not be described in detail herein.

Although the present invention has been disclosed above, the scope of protection of the present invention is not limited thereto. Various modifications and variations may be made by those skilled in the art without departing from the spirit or scope of the present invention, and all of these modifications and variations should fall within the scope of protection of the present invention.

## Claims

1. A cup holder apparatus, **characterized by** comprising a box body (1), a first rotation mechanism (2), and a partition plate structure (3), wherein an opening (4) is provided in a top portion of the box body (1), a storage cavity structure (5) is formed in the interior of the box body (1), the partition plate structure (3) is arranged in the storage cavity structure (5), and one end of the partition plate structure (3) is rotatably mounted at a bottom portion of the box body (1) by means of the first rotation mechanism (2), so that the partition plate structure (3) rotates relative to the box body (1); when the partition plate structure (3) rotates to a calibrated position, the partition plate structure (3) separates out, from the storage cavity structure (5), a cavity structure (6) for placing cups.

2. The cup holder apparatus according to claim 1, **characterized in that** the first rotation mechanism (2) comprises a rotation shaft (21) and a bearing member (22), the rotation shaft (21) is mounted to the storage cavity structure (5), the bearing member (22) is sleeved on the rotation shaft (21), and the partition plate structure (3) is connected to the bearing member (22).

3. The cup holder apparatus according to claim 2, **characterized in that** a limiting port (7) is provided in the bottom portion of the box body (1), the bearing member (22) is positioned at an edge of the limiting port (7), a circumferential side wall of the bearing member (22) is provided with a planar structure (221), the planar structure (221) is arranged towards the limiting port (7), and the bearing member (22) is used for being rotated into the limiting port (7), so that the planar structure (221) abuts against a side wall of the box body (1) enclosing the limiting port (7).

4. The cup holder apparatus according to claim 3, **characterized by** further comprising a shielding plate (8), wherein the shielding plate (8) is mounted at the bottom portion of the box body (1) and covers the limiting port (7), and the shielding plate (8) is recessed towards a direction away from the bearing member (22) and used for accommodating a part of the bearing member (22).

5. The cup holder apparatus according to claim 1, **characterized in that** the partition plate structure (3) comprises a first partition plate (31) and a second partition plate (32), one end of the first partition plate (31) is connected to the first rotation mechanism (2), one end of the second partition plate (32) is connected to the other end of the first partition plate (31), and the other end of the second partition plate (32) bends and extends towards a direction close to the first rotation mechanism (2), so that the second partition plate (32) is used for shielding the first rotation mechanism (2).

6. The cup holder apparatus according to claim 5, **characterized by** further comprising a chuck (9), wherein the chuck (9) is mounted to the first partition plate (31) and arranged at an included angle with the first partition plate (31), and the chuck (9) is used for clamping the cups with the side wall of the box body (1).

7. The cup holder apparatus according to claim 6, **characterized by** further comprising a second rotation mechanism (10), wherein the chuck (9) is rotatably mounted to the first partition plate (31) by means of the second rotation mechanism (10), and the chuck (9) is used for being rotated to be attached to the first partition plate (31) or at a preset angle with the first partition plate (31).

8. The cup holder apparatus according to claim 7, **characterized in that** the second rotation mechanism (10) comprises a first gear portion (101) and a second gear portion (102), the first gear portion (101) is connected to the first rotation mechanism (2) by means of a linkage mechanism (12), the first gear portion (101) is meshed with the second gear portion (102), and the second gear portion (102) is connected to the chuck (9).

9. The cup holder apparatus according to claim 8, **characterized in that** the linking mechanism (12) comprises a first connecting rod (121) and a second connecting rod (122), one end of the first connecting rod (121) is connected to the first gear portion (101), the other end of the first connecting rod (121) is hinged to one end of the second connecting rod (122), and the other end of the second connecting rod (122) is hinged to the first rotation mechanism (2).

10. An automobile, **characterized by** comprising the cup holder apparatus of any one of claims 1 to 9.
